# EUROPEAN PATENT APPLICATION

(11) **EP 1 771 028 A1**
(43) Date of publication of application: **04.04.2007**
(21) Application number: 06020329.6
(22) Date of filing: 27.09.2006
(51) Int. Cl.: H04Q 7/38, H04L 12/28

(54) **Presence determination device and presence determination method**

(30) Priority: 29.09.2005 JP 2005284757
(71) Applicant: NTT DoCoMo, Inc., Tokyo 100-6150 (JP)
(72) Inventor: Hasegawa, Shin, 2-chome, Chiyoda-ku, Tokyo 100-6150 (JP); Ando, Manabu, 2-chome, Chiyoda-ku, Tokyo 100-6150 (JP); Kimoto, Masatoshi, 2-chome, Chiyoda-ku, Tokyo 100-6150 (JP)
(74) Representative: GROSSE BOCKHORNI SCHUMACHER

(57) **Abstract**

Position determination of a WLAN user is improved in that detection areas (10a,11a) are separated by a space (boundary area) larger than the uncertainty of the location determination of the user terminal. The boundary area is considered a separate area thus avoiding wrong position judgement of the user being in a particular area or room.
If a user terminal is located in a boundary area a presence management device (100) may not be able to identify from that location information the area information and interpreting this as user being located in a boundary area and keeping the old area information. Else wise, if the presence management device (100) is able to determine the boundary area information it also keeps the old area information. A further improvement is introduced by determining the area a user terminal is probably in of a user terminal being in a boundary area. Therein, the ratio of number of visits in each of the neighbouring areas is interpreted as probability of current position being in one of these areas.

## Description

### BACKGROUND OF THE INVENTION

### Field of the Invention

The present invention relates to a presence management device and a presence management method for managing presence information corresponding to the location of a user.

### Related Background Art

As a technique to manage presence information of a user, there is a presence information management device described in Japanese Patent Application Laid-Open Gazette No. 2004-318529. The presence management device described in this Laid-Open Gazette can manage and update presence information indicating the status of a user by receiving a status from a service control node.

### SUMMARY OF THE INVENTION

Here, it is convenient if presence information can be updated in accordance with the location of a user. For example, there can be a presence management device capable of performing location positioning to a mobile terminal possessed by a user using, for example, a wireless LAN etc, and capable of updating and utilizing the location of the user and the status of the user based on location information obtained by the location positioning.

However, with a method for thus positioning a location, there are cases where positioning errors occur. Therefore, it can be thought that the above-described presence management device judges, despite that the user is in one area, that the user is in another area different from the one area, resulting in erroneous recognition of the area in which the user (mobile terminal) is located.

Accordingly, with the above-described method for associating the presence information based on the location of the user (mobile terminal), there is a possibility that erroneous presence information is recognized due to the positioning error.

Therefore, the object of the present invention is to provide a presence management device and a presence management method capable of recognizing and managing presence information of a user by taking into consideration positioning errors in the location of the mobile terminal held by the user.

In order to solve the above-described problem, a presence management device of the present invention comprises a storage means for storing area information for defining the range of each area in a plurality of areas so as to form the plurality of areas at predetermined intervals by associating the area information with status information indicating the status of a user, a location detection means for detecting the location of a mobile terminal possessed by the user, and a presence management means for, when judging that the mobile terminal is in one area by reading the status information from the storage means based on the area information indicating the area in which the mobile terminal detected by the location detection means is located, storing the status information as presence information and for, when judging that the mobile terminal is in a boundary area because of being not capable of identifying the area in which the mobile terminal detected by the location detection means is located, maintaining the already stored presence information.

Further, a presence management method of the present invention, executed by a presence management device having a storage means for storing area information for defining the range of each area in a plurality of areas so as to form the plurality of areas at predetermined intervals by associating the area information with status information indicating the status of a user, comprises a location detection step for detecting the location of a mobile terminal possessed by the user and a presence management step for, when judging that the mobile terminal is in one area by reading the status information from the storage means based on the area information indicating the area in which the mobile terminal detected in the location detection step is located, storing the status information as presence information, and for, when judging that the mobile terminal is in a boundary area because of being not capable of identifying the area in which the mobile terminal detected in the location detection step is located, maintaining the already stored presence information.

According to the present invention, when it is judged that the mobile terminal is in one area by storing area information for defining the range of each area in a plurality of areas so as to form the plurality of areas at predetermined intervals by associating the area information with status information indicating the status of a user, detecting the location of a mobile terminal possessed by the user, and reading the status information based on the area information indicating the area in which the detected mobile terminal is located, it is possible to store the status information as presence information and when it is judged that the mobile terminal is in a boundary area because of being not capable of identifying the area in which the detected mobile terminal is located, it is possible to maintain the already stored presence information. Due to this, when the user holding the mobile terminal exists within a predetermined space between areas without being judged, despite the fact that the user is in one area, to be located in another neighboring area beyond the one area, it is possible to prevent the status of the user from being erroneously recognized based on the error in detecting the location of the mobile terminal by maintaining the already stored presence information instead of reading the status information and thus it is possible to store the accurate presence information corresponding to the location of the mobile terminal held by the user. Further, because the boundary area is not defined as the area information, it is possible to reduce the amount of information that has to be prepared in advance.

Further, the presence management device of the present invention comprises a storage means for storing area information for defining the range of each area in a plurality of areas so as to form the plurality of areas at predetermined intervals by associating the area information with status information indicating the status of a user and for storing area information indicating the range of boundary areas formed closely between areas in the plurality of areas by associating the area information with identification information which indicates being a boundary area, a location detection means for detecting the location of a mobile terminal possessed by the user, and a presence management means for, when judging that the mobile terminal is in an area by reading the status information from the storage means based on the area information indicating the area in which the mobile terminal detected by the location detection means is located, storing the status information as presence information and for, when judging that the area in which the user is located is a boundary area by reading the identification information from the storage means based on the area information of the area in which the mobile terminal detected by the location detection means is located, performing processing to maintain the already stored presence information.

Furthermore, the presence management method of the present invention, executed by a presence management device having a storage means for storing area information for defining the range of each area in a plurality of areas so as to form the plurality of areas at predetermined intervals by associating the area information with status information indicating the status of a user and for storing area information indicating the range of boundary areas formed closely between areas in the plurality of areas by associating the area information with identification information which indicates being a boundary area, comprises a location detection step for detecting the location of a mobile terminal possessed by the user and a presence management step for, when judging that the mobile terminal is in one area by reading the status information from the storage means based on the area information indicating the area in which the mobile terminal detected in the location detection step is located, storing the status information as presence information, and for, when judging that the area in which the user is located is a boundary area by reading the identification information from the storage means based on the area information of the area in which the mobile terminal detected in the location detection step is located, performing processing to maintain the already stored presence information.

According to the present invention, when it is judged that the mobile terminal is in one area by storing area information for defining the range of each area in a plurality of areas so as to form the plurality of areas at predetermined intervals by associating the area information with status information indicating the status of a user, storing area information indicating the range of boundary areas formed closely between areas in the plurality of areas by associating the area information with identification information which indicates being a boundary area, detecting the location of a mobile terminal possessed by the user, and reading the status information based on the area information indicating the area in which the detected mobile terminal is located, it is possible to store the status information as presence information and when it is judged that the area in which the user is located is a boundary area by reading the identification information based on the area information of the area in which the detected mobile terminal is located, it is possible to perform processing to maintain the already stored presence information. Due to this, when the user holding the mobile terminal exists within a predetermined space between areas without being judged, despite the fact that the user is in an area, to be located in another neighboring area beyond the one area, it is possible to prevent the status of the user from being erroneously recognized based on the error in detecting the location of the mobile terminal by maintaining the already stored presence information instead of reading the status information and thus it is possible to store the accurate presence information corresponding to the location of the mobile terminal held by the user.

It is preferable for the presence management device of the present invention to further comprise a frequency storage means for storing the number of times of positioning the location of the mobile terminal for each of the area information, and for the presence management means to judge the area in which the user is located based on the number of times of positioning stored in the frequency storage means, and read and store the status information of the user from the storage means based on the area information of the judged area instead of performing processing to maintain the already stored presence information when judging that the mobile terminal is located in the boundary area.

It is preferable for the presence management method of the present invention, that the presence management device further comprises a frequency storage means for storing the number of times of positioning the location of the mobile terminal for each of the area information and the presence management device, in the presence management step, judges the area in which the user is located based on the number of times of positioning stored in the frequency storage means, and reads and stores the status information of the user from the storage means based on the area information of the judged area instead of performing processing to maintain the already stored presence information when judging that the mobile terminal is located in the boundary area.

According to the present invention, it is possible to store the number of times of positioning the location of the mobile terminal for each area information indicating the area and when it is judged that the mobile terminal is located in the boundary area, to judge the area in which the user is located based on the stored number of times of positioning and read and store the status information of the user from the storage means based on the area information of the judged area instead of performing processing to maintain the already stored presence information. Due to this, it is possible to perform processing based on statistical information, judge the area in which the user is located based on the past information, and perform management of the accurate presence information based on the area information of the judged area.

With the present invention, it is possible to prevent the status of a user from being erroneously recognized based on the error in the location detection of a mobile terminal and to keep in storage accurate presence information corresponding to the location of the mobile terminal held by the user.

### BRIEF DESCRIPTION OF THE DRAWINGS

Fig. 1(a) is a diagram showing an outline of a prior art.

Fig. 1(b) is a diagram showing an outline of a first embodiment.

Fig. 2 is a block configuration diagram of a presence management device 100.

Fig. 3 is an explanatory diagram showing a specific example of an area table 101.

Fig. 4 is an explanatory diagram showing a specific example of a conversion rule table 102.

Fig. 5 is a flow chart showing the operation of the presence management device 100 in the first embodiment.

Fig. 6 is an outline diagram showing an outline of an office 200 consisting of seats 201 and two conference rooms 203a and 203b.

Fig. 7 is a schematic diagram of the office 200 in which a plurality of areas are formed.

Fig. 8 is an explanatory diagram showing area information for forming areas 1 to 7.

Fig. 9 is an explanatory diagram showing presence information corresponding to the areas 1 to 7 and an out-of-serving area.

Fig. 10 is an explanatory diagram showing area information stored in an area table 101 in a second embodiment.

Fig. 11 is an explanatory diagram showing presence information stored in the conversion rule table 102.

Fig. 12 is a flow chart showing the operation of the presence management device 100 in the second embodiment.

Fig. 13 is a schematic diagram of the office 200 in which a plurality of areas and boundary areas are formed in the second embodiment.

Fig. 14 is a block configuration diagram of a presence management device 100b in a third embodiment.

Fig. 15 is an explanatory diagram showing frequency information stored in a frequency table 107.

Fig. 16 is a flow chart showing the operation of the presence management device 100b in the third embodiment.

Fig. 17 is a system configuration diagram showing a system configuration when the presence management device 100 is installed within the country and an area 200 to be a range for which location detection is performed is positioned abroad.

### DESCRIPTION OF THE PREFERRED EMBODIMENTS

The present invention can be understood easily by taking into consideration the following detailed description with reference to accompanied drawings shown for an embodiment. Subsequently, embodiments of the present invention are explained with reference to the accompanied drawings. When possible, the same symbols are attached to the same parts and its duplicated explanation is omitted.

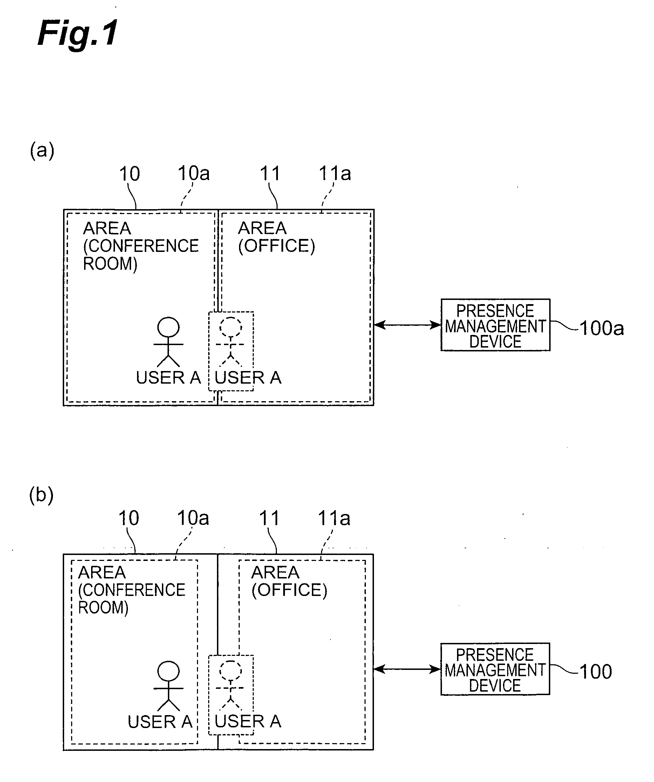

First, an environment to which a presence management device 100 of a first embodiment is applied is explained. As shown in Fig. 1(b), in the first embodiment, an environment is supposed, which consists of a conference room 10, which is an area 10a, and an office 11, which is an area 11a. A user holds a mobile terminal to be subjected to location positioning and it is possible for the presence management device 100 to judge which area the user is in between the area 10a and the area 11a by performing location positioning of the mobile terminal. Further, the presence management device 100 stores rule information for identifying status information indicating the status of the user in accordance with the location of the mobile terminal. Therefore, it is possible for the presence management device 100 to grasp the status of the user by reading status information in accordance with the location of the user based on the rule information and temporarily storing the information as presence information of the user. Further, it is possible for the presence management device 100 to display the presence information of the user by the operation of an operator and transmit the presence information of the user upon request by an external terminal. Here, the presence information in the present embodiment is status information indicating the status of the user, for example, status information indicating "In conference", "Out", "Seated", etc. It may also be possible to include position information for identifying the position in which the user is located, such as "In office", "In conference room", etc. in the presence information, in addition to the status information.

Next, a presence management device 100a corresponding to the prior art is explained. Fig. 1(a) is an explanatory diagram when the presence management device 100a manages the range of the area 10a and the area 11 a as substantially the same range of the conference room 10 and the office 11, which is a physical range. When such an area shown in Fig. 1(a) is formed, when a user (mobile terminal) is near the boundary line between the areas, there may be a case where the presence management device 100a judges that the user (mobile terminal) is in the office 11 despite the fact that the user is actually in the conference room 10 due to the error in location positioning. At this time, the presence management device 100a reads the status information and position information based on the rule information corresponding to the area 11 a showing the office 11 and recognizes the status of the user erroneously as a result.

To avoid this, in the explanatory diagram showing the outline of the first embodiment shown in Fig. 1(b), the presence management device 100 stores area information indicating areas so that a boundary area capable of absorbing the positioning error is formed between the area 10a showing the conference room 10 and the area 11 a showing the office 11 in order to prevent erroneous recognition of the status of the user even if an error is produced in the location positioning of the user (mobile terminal). Then, when having judged that the user is in the boundary area, the presence management device 100 performs processing to maintain the presence information of the user without rewriting the status information and position information of the user read most recently. Because of this, even in the case of a positioning error, the erroneous status information or position information is never read.

By the way, the boundary area is a virtual area resulting from the recognition of the range of the area 10a and the area 11 a as a range smaller than the physical range, that is, the conference room 10 and the office 11. It is necessary for the presence management device 100 to determine the ranges of the area 10a and the area 11 a so that the boundary area can be formed by spacing the area 10a and the area 11 a at a predetermined distance.

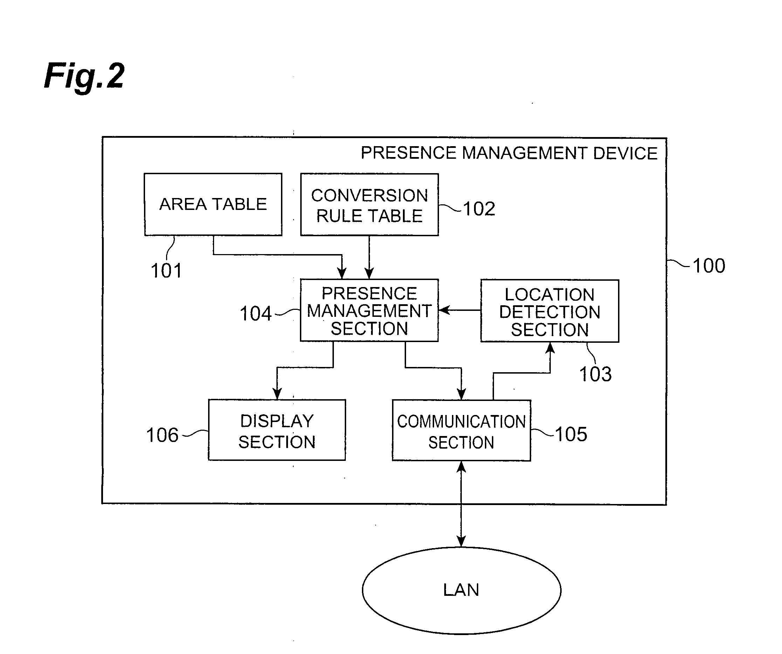

The details of the presence management device 100 in the first embodiment, which operates in the above-mentioned manner, are explained. Fig. 2 is a block configuration diagram of the presence management device 100. The presence management device 100 is configured so as to include an area table 101 (storage means), a conversion rule table 102 (storage means), a location detection section 103 (location detection means), a presence management section 104 (presence management means), a communication section 105, and a display section 106. By the way, the area table 101 and the conversion rule table 102 may be configured as the same table by storing their contents being associated with each other.

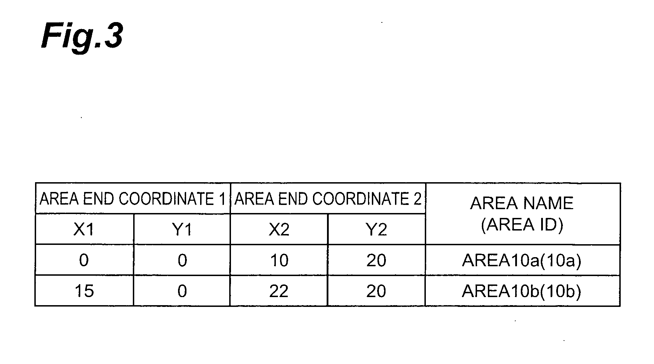

The area table 101 is a storage table for storing area information for identifying an area, that is, a storage table for storing an area name and two area end coordinates for identifying the area being associated with each other as area information for each area. Here, a specific example is explained using Fig. 3. Fig. 3 is an explanatory diagram showing a specific example of area information in the area table 101. As shown in Fig. 3, the area table 101 stores, for example, "area 10a" (area ID: 10a), an area name, and two area end coordinates, that is, area end coordinate 1 (X1, Y1) and area end coordinate 2 (X2, Y2) for identifying the area, being associated with each other.

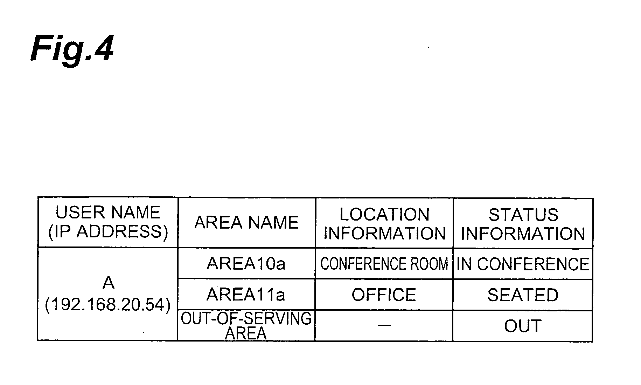

The conversion rule table 102 is a storage table for storing rule information for identifying the presence information of a user corresponding to the area where the user is located for each user, and in addition, for storing a user name (IP address), an area name, position information indicating the position where the user is located, and status information indicating the status of the user, all of these being associated with each another. Here, a specific example is explained using Fig. 4. Fig. 4 is an explanatory diagram showing a specific example of the conversion rule table 102. As shown in Fig. 4, the position information and status information are stored by being associated with the user name and the area ID indicating the area name. By the way, it is possible to identify a user using the IP address of the mobile terminal held by the user. In Fig. 4, for example, "A" as the user name, "192.168.20.54" as the IP address of the user, and the area 10a corresponding to the user are stored by being associated with "Conference room" as location information and "In conference" as status information. Incidentally, it is preferable for the conversion rule table 102 to store at least status information.

The location detection section 103 is a section that detects the location of the mobile terminal held by the user by utilizing a wireless LAN, and capable of detecting the location of the mobile terminal by receiving the location information of the mobile terminal transmitted via a LAN and the wireless LAN through the communication section 105.

The presence management section 104 identifies an area in accordance with the location of the user based on the location of the user (mobile terminal) detected by the location detection section 103 and the area information stored in the area table 101. Then, the presence management section 104 reads the status information and position information corresponding to the area name (or the area ID) of the identified area based on the rule information stored in the conversion rule table 102 and temporarily stores the information as the presence information of the user. It is possible for the presence management section 104 to output the temporarily stored presence information to another communication terminal via the communication section 105 and display the presence information of the user on the other communication terminal or the display section 106 by outputting the information to the display section 106.

Further, the presence management section 104 judges whether or not the identified area is the boundary area. When having judged that the identified area is the boundary area, the presence management section 104 performs processing to maintain the presence information stored inside the presence management section 104 without updating the information. Here, the presence management section 104 judges that the area in which the user is located is the boundary area when the area in which the user is located cannot be identified based on the area information stored in the area table 101 and performs processing to maintain the presence information of the user stored inside the presence management section 104 without updating the information.

Further, it is possible for the presence management section 104 to judge whether or not the user is in the serving area of the wireless LAN and when having judged that the user is not in the serving area of the wireless LAN, the presence management section 104 performs processing to rewrite the presence information stored inside the presence management section 104 to status information to the effect that the user is "Out".

The communication section 105 is a section that is connected to a LAN, performs communication of data, and transmits presence information to a communication terminal that has requested therefor. In addition, the display section 106 is a section that displays data and displays presence information.

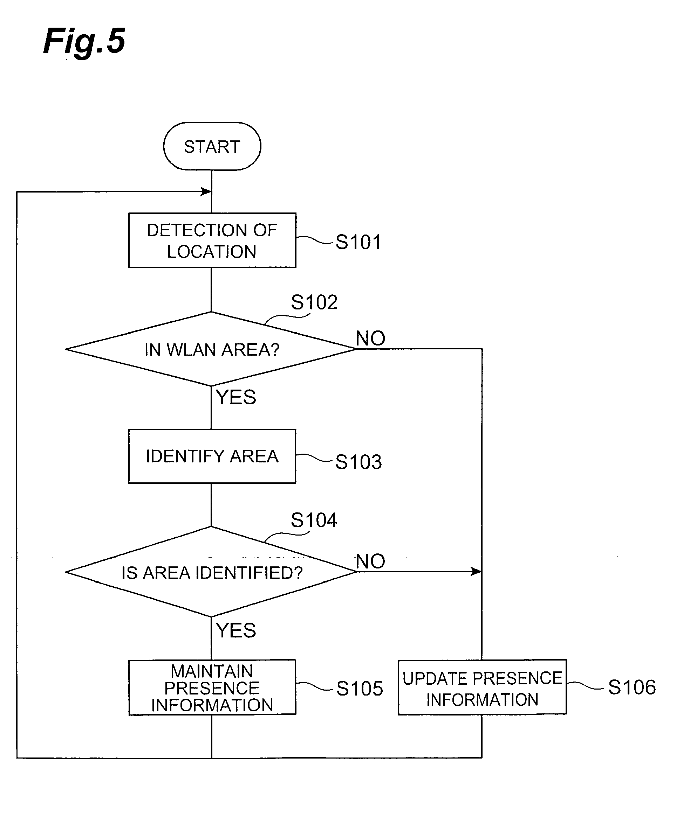

The operation of the presence management device 100 in the first embodiment, which is configured in the manner described above, is explained. Fig. 5 is a flow chart showing the operation of the presence management device 100 in the first embodiment. First, location information indicating the location of one user (mobile terminal) having been subjected to positioning by the wireless LAN is detected by the location detection section 103 (S101) in order to detect the location of the user. Whether or not the one user to be detected is in the serving area of the wireless LAN (WLAN) is judged by the presence management section 104 (S102).

In S102, when it is judged that the one user is not in the serving area of the wireless LAN, that is, the location detection section 103 cannot detect the location of the one user, by the presence management section 104, processing to update the presence information inside the presence management section 104 is performed (S106). Here, as processing to update the presence information, the status information "Out" corresponding to the item "Out-of-serving area" described in the conversion rule table 102 shown in Fig. 4 is read. The presence information of the one user to be detected, which is stored in the presence management section 104, is rewritten to the status information indicating the status information "Out" (in this case, there is no position information) and the presence information of the one user to be detected, which is stored in the presence management section 104, is updated.

Further, in S102, when it has been judged that the one user is in the serving area of the wireless LAN, that is, the location detection section 103 has detected the location of the one user, by the presence management section 104, area identification processing is performed by the presence management section 104. Here, which area the one user is in is identified by the presence management section 104 based on the area information described in the area table 101 shown in Fig. 3 and the location information indicating the location of the one user detected by the location detection section 103 (S103)

Next, whether or not the area identified in S103 is the boundary area is judged by the presence management section 104 (S104). Here, when one area is identified by the presence management section 104 based on the area information in the area table 101, it is judged that the identified area is not the boundary area by the presence management section 104. Alternatively, one area cannot be identified by the presence management section 104 based on the area information, it is judged that the identified area is the boundary area by the presence management section 104.

In other words, in accordance with the judgment by the presence management section 104 as to whether or not the location information indicating the location of the one user detected by the location detection section 103 exists inside the area information in the area table 101, whether or not the location in which the one user exists is the boundary area is judged. For example, when the location information indicating the location of the one user detected by the presence management section 104 does not exist inside the area information in the area table 101, it is judged that the location is the boundary area by the presence management section 104.

When the area in which the one user exists cannot be identified and it is judged that the location of the one user is the boundary area by the presence management section 104, the status information and the position information of the one user are not read from the conversion rule table 102 and the processing to maintain the presence information of the one user stored inside the presence management section 104 is performed (S105).

For example, despite the fact that a user A, the one user, actually exists in the conference room 10, which is the area 10a, as shown in Fig. 1(b), the location information indicating that the user A is in the office 11, which is the area 11a, is detected by the location detection section 103. However, when it is judged that the user A is in the boundary area, even if the location having been subjected to positioning is judged to be the office 11, which is the area 11a, the presence information inside the presence management section 104 is maintained and it is recognized that the user A exists in the conference room 10, which is the area 10a.

When it is judged that the location in which the one user exists is not the boundary area by the presence management section 104, the status information and position information corresponding to the area name (or the area ID) of the area in which the one user exists are read from the conversion rule table 102 by the presence management section 104 and updated by being stored again as the presence information of the one user inside the presence management section 104 (S106).

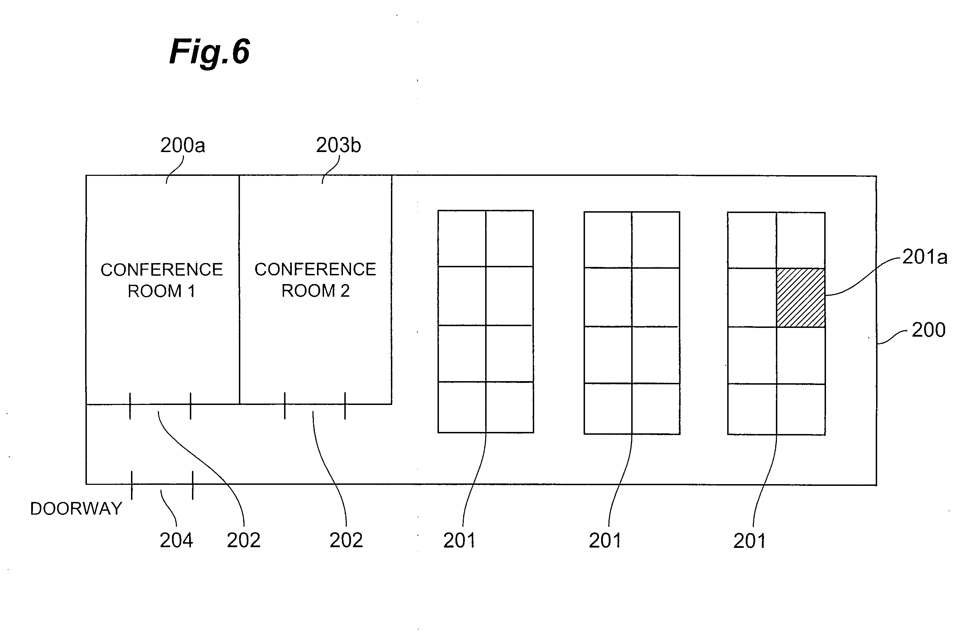

Next, the operation when the presence management device 100 in the first embodiment is applied to a more detailed situation is explained. Fig. 6 is an outline diagram showing the outline of an office 200 consisting of seats 201 and two conference rooms 203a and 203b. As shown in Fig. 6, the office 200 is configured so as to include the plurality of seats 201, doors 202 through which to enter and exist from the conference room 203a and the conference room 203b, the conference room 203a, the conference room 203b, and a doorway 204 through which to enter and exit from the office. Here, it is assumed that the seat of the user A is the seat 201a.

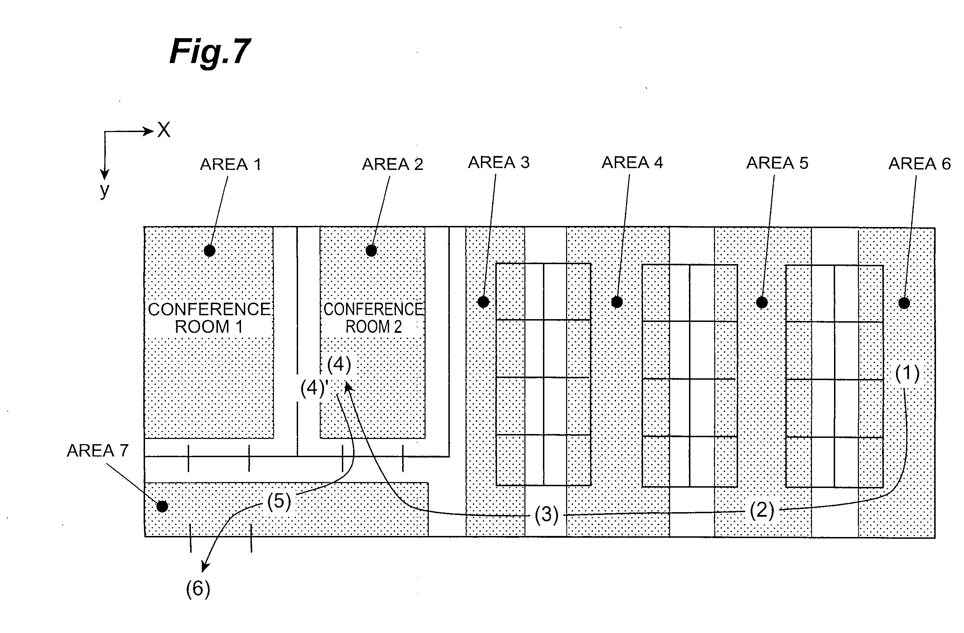

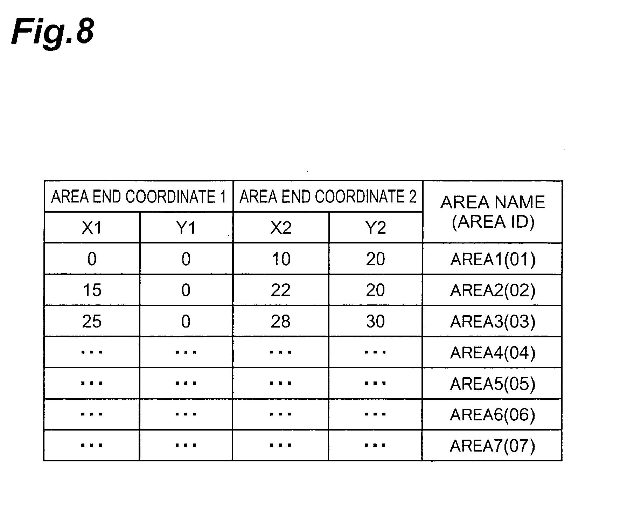

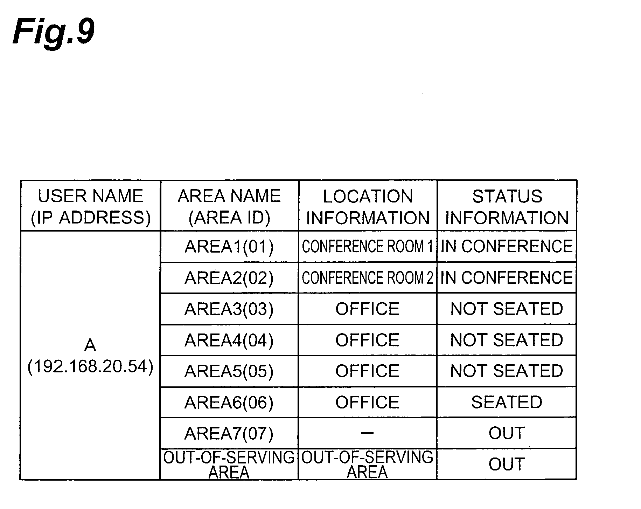

A schematic diagram of the office 200 thus configured, in which a plurality of areas are formed, is shown in Fig. 7. Fig. 7 is a schematic diagram of the office 200 shown in Fig. 6, in which a plurality of areas is formed. As shown in Fig. 7, the areas formed in the office 200 are divided into areas 1 to 7. The areas 1 to 7 are formed in such a manner that the area end coordinates are described in the area table 101 of the presence management device 100. Specifically, it is assumed that the area information shown in Fig. 8 is stored in the area table 101. Further, it is assumed that the rule information shown in Fig. 9 is stored in the conversion rule table 102.

Here, Fig. 8 and Fig. 9 are explained. Fig. 8 is an explanatory diagram showing the area information for forming the areas 1 to 7 shown in Fig. 7 and the area information is stored in the area table 101. The area table 101 stores the area end coordinates of the respective areas 1 to 7 as area information. Further, Fig. 9 is an explanatory diagram showing the rule information that associates the status information and the position information for each of the areas 1 to 7 and the out-of-serving area shown in Fig. 7 with each other and the rule information is stored in the conversion rule table 102. The conversion rule table 102 stores, for example, the position information "Conference room 1" corresponding to the area 1 and the status information "In conference" as the rule information.

The specific operation when updating the presence information of the user A inside the presence management section 104 in the case where the presence management device 100 having such area information and rule information is applied to the office shown in Fig. 6 is explained. First, when the user A is seated on the seat 201 a, it is judged that the user A is in the area 6 by the presence management section 104 based on the location of the user A detected by the location detection section 103 (1). The position information and status information corresponding to the area name (or the area ID) of the area in which the user A is located are read from the conversion rule table 102 by the presence management section 104. Here, based on the rule information stored in the conversion rule table 102 shown in Fig. 9, the position information "In office" and the status information "Seated" corresponding to the area 6 in which the user A is located are read and temporarily stored in the presence management section 104 as the presence information of the user A.

Next, when the user A moves to the location shown by (2), it is judged that the user A is in the area 5 by the presence management section 104 when detection of the location of the user A is performed by the location detection section 103 (2). At this time, the position information and status information corresponding to the area 5 are read by the presence management section 104 and here, that the position information is "In office" and the status information is "Not seated" is read from the conversion rule table 102 that stores the rule information shown in Fig. 9 and temporarily stored in the presence management section 104 as the presence information of the user A.

Subsequently, it is assumed that the location of the user A is detected by the location detection section 103 when the user A is in the boundary area between the area 3 and the area 4 (3). At this time, the user A is in the boundary area, therefore, the presence information, which is the most recent information when the user is in (2), is maintained as it is and the presence information in which the position information is "In office" and the status information is "Not seated" when the user A is in the area 5 is maintained as it is inside the presence management section 104. Then, the user A enters the conference room 203b and that the user is in the conference room 203b is detected by the location detection section 103. That the user A is in the conference room 203b is recognized by the presence management section 104 and the corresponding status information and position information are read (4). Here, the position information "Conference room 2" and the status information "In conference" are read from the conversion rule table 102 that stores the rule information shown in Fig. 9 by the presence management section 104 and temporarily stored in the presence management section 104 as the presence information of the user A.

Here, if the user A is in the corner in the conference room 203b, there may be a case where it is detected that the user is in the location of the conference room 203a by the location detection section 103 due to the positioning error. However, it is judged that the location is the boundary area formed between the area 1 and the area 2 by the presence management section 104 (4'). Then, in the presence management section 104, the presence information of the user A, that is, the position information is "Conference room 2" and the status information is "In conference", is maintained.

Next, it is judged that the user A is in the area 7 by the presence management section 104 when the user A is to go out of the office from the conference room 203b through the area 7 (5). Here, the status information "Out" (no position information in this case) is read from the conversion rule table 102 that stores the rule information shown in Fig. 9 and temporarily stored in the presence management section 104 as the presence information of the user A. When stepping out of the office, the user A enters the out-of-serving area of the wireless LAN and if the detection of the location of the user A is performed by the location detection section 103 at, for example, the location of (6), the location cannot be detected and judged that the user is in the out-of-serving area of the wireless LAN by the presence management section 104, and the position information "Out-of-serving area" and the status information "Out" are read from the conversion rule table 102 that stores the rule information shown in Fig. 9 and temporarily stored in the presence management section 104 as the presence information of the user A.

As described above, the presence management section 104 grasps the area in which the user A is located based on the location detected by the location detection section 103, reads the status information and position information in accordance with the area and stores as presence information, and at the same time, when the user A is in the boundary area, the presence management section 104 performs processing to maintain the presence information read most recently, therefore, it is possible to grasp the accurate presence information of the user A without reading erroneous presence information due to the positioning error.

In the first embodiment described above, the area not contained in the areas stored in the area table 101 is recognized as the boundary area, however, this is not limited and it may also be possible for the area table 101 to store the area end coordinates indicating the boundary area.

A second embodiment in which the area end coordinates are stored in the area table 101 as the boundary area is explained below. Note that the presence management device 100 in the second embodiment is the same as that in the block configuration diagram shown in Fig. 6 but differs in that the boundary area is defined explicitly in the area information stored in the area table 101 and in the rule information stored in the conversion rule table 102.

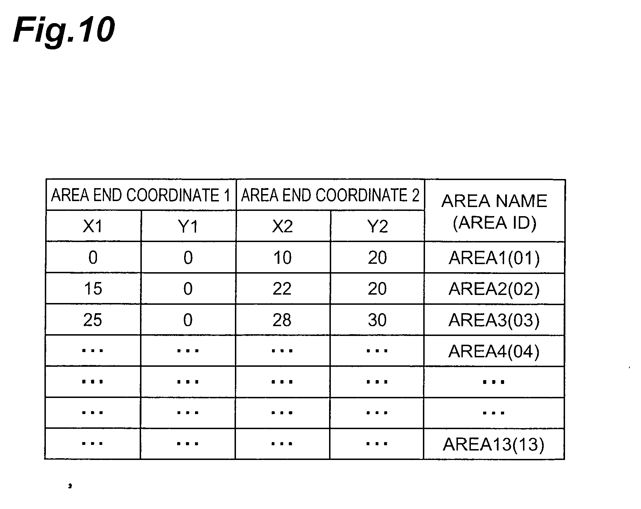

Here, the area information stored in the area table 101 and the presence information stored in the conversion rule table 102 are explained. Fig. 10 is an explanatory diagram showing the area information stored in the area table 101 in the second embodiment. The area table 101 stores the area end coordinates of the respective areas 1 to 13 as the area information.

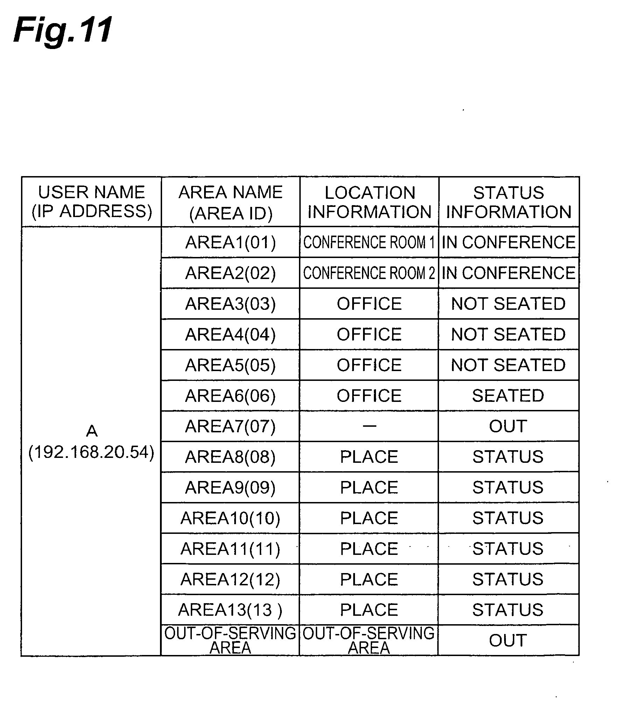

In addition, Fig. 11 is an explanatory diagram showing the rule information stored in the conversion rule table 102. In the second embodiment, the conversion rule table 102 stores area names (or area IDs) by associating each of them with the position information and the status information as the rule information as shown in Fig. 11. Further, the conversion rule table 102 stores identification information indicating that the presence information stored most recently in presence management section 104 is maintained for each of the areas 8 to 13, which are the boundary areas, as the information indicating the boundary area. For example, the conversion rule table 102 stores the position information "Conference room 1" corresponding to the area 1 and the status information "In conference" as the rule information and also stores the position information "Place" corresponding to the area 8 and the status information "Status". The position information "Place" and the status information "Status" are identification information indicating that processing to maintain the presence information most recently stored temporarily in the presence management section 104 without updating it, that is, identification information indicating the boundary area, when that the user A is in the area 8 has been detected in the presence management device 100. By the way, it is preferable for the conversion rule table 102 to store at least the status information.

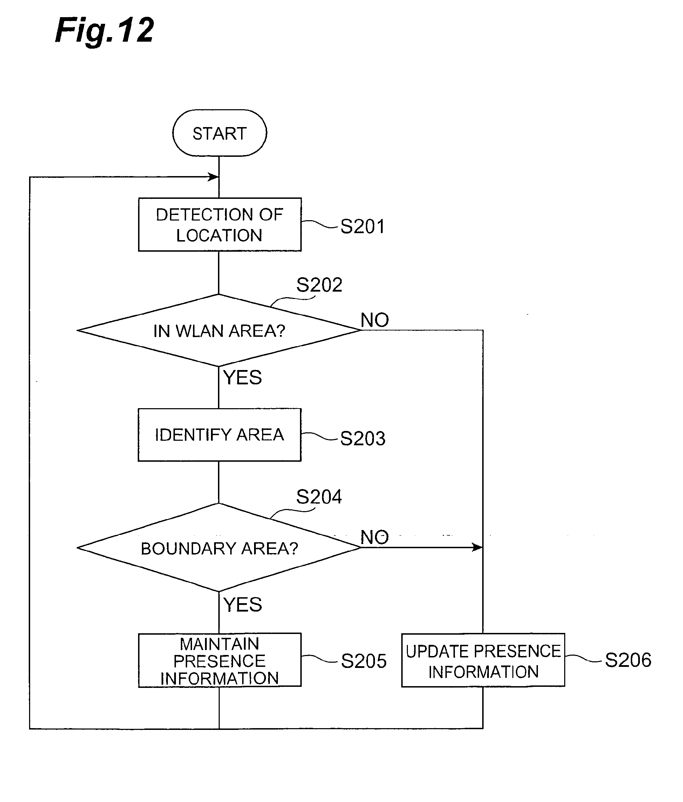

The operation of the presence management device 100 thus configured in the second embodiment is explained. Fig. 12 is a flow chart showing the operation of the presence management device 100 in the second embodiment.

The location of one user is detected by the location detection section 103 (S201) and whether or not the one user is in the serving area of the wireless LAN (WLAN) is judged (S202). When it is judged that the one user is not in the serving area of the wireless LAN by the presence management section 104, the status information "Out" is read based on the rule information stored in the conversion rule table 102 shown in Fig. 11, the presence information stored in the presence management section 104 is rewritten, and the presence information is subjected to updating processing (S206).

When it is judged that the one user is in the serving area of the wireless LAN by the presence management section 104, area identification is performed (S203). Here, the area corresponding to the location of the one user is identified by the presence management section 104 based on the area information in the area table 101 shown in Fig. 10. Then, whether or not the identified area is the boundary area is judged by the presence management section 104 (S204). Here, when it is judged that "Place" and "Status" are included in the position information and the status information read in accordance with the area name (or the area ID) of the area in which the one user is located based on the rule information in the conversion rule table 102 shown in Fig. 11, that the identified area is the boundary area is judged by the presence management section 104. Incidentally, it may also be possible that an identifier indicating the boundary area is described in the conversion rule table 102 and judgment as to being the boundary area is made based on the identifier.

Then, when it is judge that the identified area is the boundary area by the presence management section 104, the presence information is maintained inside the presence management section 104 (S205). In addition, when it is judged that the identified area is not the boundary area by the presence management section 104, the presence information is subjected to updating processing by rewriting the presence information stored in the presence management section 104 to the position information and the status information read by the presence management section 104 (S206).

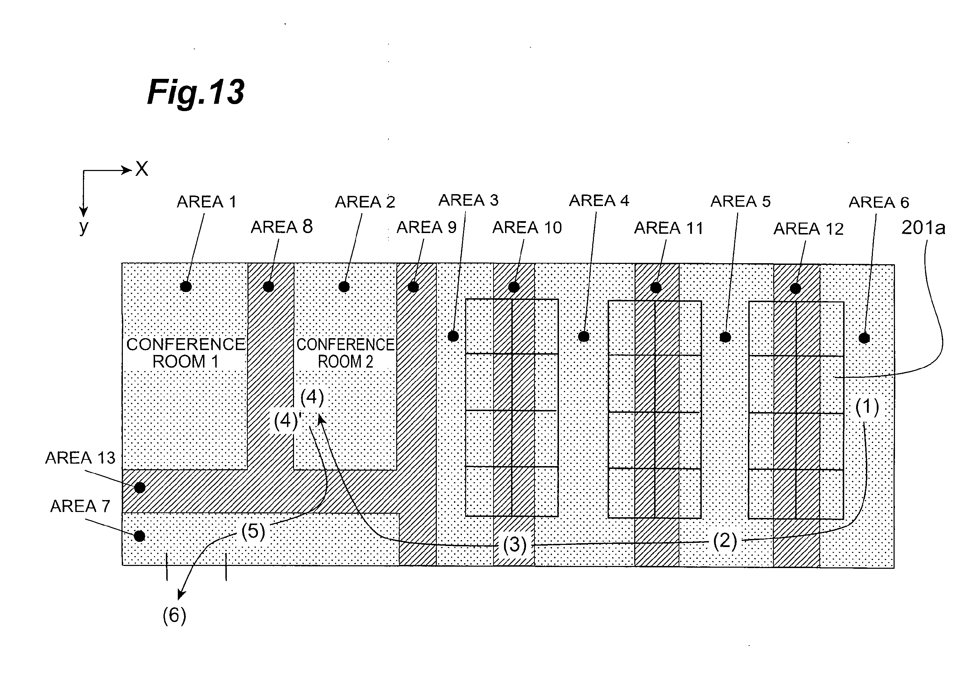

The operation when the presence management device 100 that operates in the manner described above is applied to the office shown in Fig. 6 is explained. Fig. 13 is a schematic diagram of the office 200 shown in Fig. 6 in the second embodiment, in which a plurality of areas and boundary areas are formed. As shown in Fig. 13, the areas formed in the office 200 are divided into areas 8 to 13 determined as the boundary areas, in addition to the normal areas 1 to 7 associated with the status information and the position information. The areas 1 to 7 and the areas 8 to 13 which are the boundary areas, are formed in such a manner that the area end coordinates are described in the area table 101 of the presence management device 100. Specifically, it is assumed that the area information shown in Fig. 10 is stored in the area table 101. Further, it is assumed that the status information and the position information shown in Fig. 11 are stored in the conversion rule table 102.

First, when the user A is seated on the seat 201a, it is judged that the user A is in the area 6 by the presence management section 104 based on the location of the user A detected by the location detection section 103 (1). The position information and status information corresponding to the area in which the user A is located are read from the conversion rule table 102 by the presence management section 104. Here, based on the rule information stored in the conversion rule table 102 shown in Fig. 11, the position information "In office" and the status information "Seated" corresponding to the area 6 in which the user A is located are read by the presence management section 104 and temporarily stored in the presence management section 104.

Next, when the user A moves to the location shown by (2), it is judged that the user A is in the area 5 by the presence management section 104 when detection of the location of the user A is performed by the location detection section 103 (2). At this time, the position information and status information corresponding to the area 5 are read by the presence management section 104 and here, that the position information is "In office" and the status information is "Not seated" is read from the conversion rule table 102 that stores the rule information shown in Fig. 11 and the read position information and status information are temporarily stored in the presence management section 104 as the presence information.

Subsequently, it is assumed that the location of the user A is detected by the location detection section 103 when the user A is in area 10, which is the boundary area (3). Then, the position information and status information corresponding to the area of the location detected by the location detection section 103 are read from the conversion rule table 102 by the presence management section 104. Since the position information "Place" and the status information "Status" are stored in the conversion rule table 102 corresponding to the area 10, the presence information most recently stored in the presence management section 104 is maintained, not updated. Therefore, the presence information, which is the most recent information when the user is in (2), is maintained as it is and the presence information in which the position information is "In office" and the status information is "Not seated" when the user A is in the area 5 is maintained as it is inside the presence management section 104.

Then, the user A enters the conference room 203b and that the user is in the conference room 203b is detected by the location detection section 103. Further, that the user A is in the conference room 203 is recognized by the presence management section 104 and the corresponding position information and status information are read (4). Here, the position information "Conference room 2" and the status information "In conference" are read from the conversion rule table 102 that stores the rule information shown in Fig. 11 by the presence management section 104 and temporarily stored in the presence management section 104.

Subsequently, if the user A is in the corner in the conference room 203b, there may be a case where it is detected that the user A is in the location of the conference room 203a by the location detection section 103 due to the positioning error. However, that the detected location is the area 8 is recognized by the presence management section 104 and the position information "Place" and the status information "Status" are read corresponding to the area 8. Then, it is judged by the presence management section 104 that the identified area 8 is the boundary area (4'). The presence management section 104 having judged to be boundary area recognizes that the presence information should be maintained. Therefore, inside the presence management section 104, the position information "Conference room 2" and the status information "In conference" are maintained as the presence information of the user A.

Next, it is judged that the user A is in the area 7 by the presence management section 104 when the user A is to go out of the office from the conference room 203b through the area 7 (5). Here, the status information "Out" (no position information in this case) is read from the conversion rule table 102 that stores the presence information shown in Fig. 11 and temporarily stored in the presence management section 104 as the presence information. When stepping out of the office, the user A enters the out-of-serving area of the wireless LAN and if the detection of the location of the user A is performed by the location detection section 103 at, for example, the location of (6), the location cannot be detected and is judged that the user is in the out-of-serving area of the wireless LAN by the presence management section 104, and the position information "Out-of-serving area" and the status information "Out" are read from the conversion rule table 102 that stores the rule information shown in Fig. 11 and temporarily stored in the presence management section 104.

As described above, the presence management device 100 also defines explicitly the range of the boundary area as same as the area with which the status information and the position information are associated, and stores the rule information corresponding to the boundary area, whereby it is possible to obtain the same effect as that in the above-described first embodiment. In other words, the presence management section 104 reads the status information and the position information corresponding to the area and stores the status information and position information as the presence information as well as grasping the area in which the user A is located based on the location detected by the location detection section 103, and when the user A is in the boundary area, the presence management section 104 performs processing so as to maintain the presence information read most recently, therefore, it is unlikely that erroneous status information and position information are read due to the positioning error and it is possible to grasp the accurate presence information of the user A.

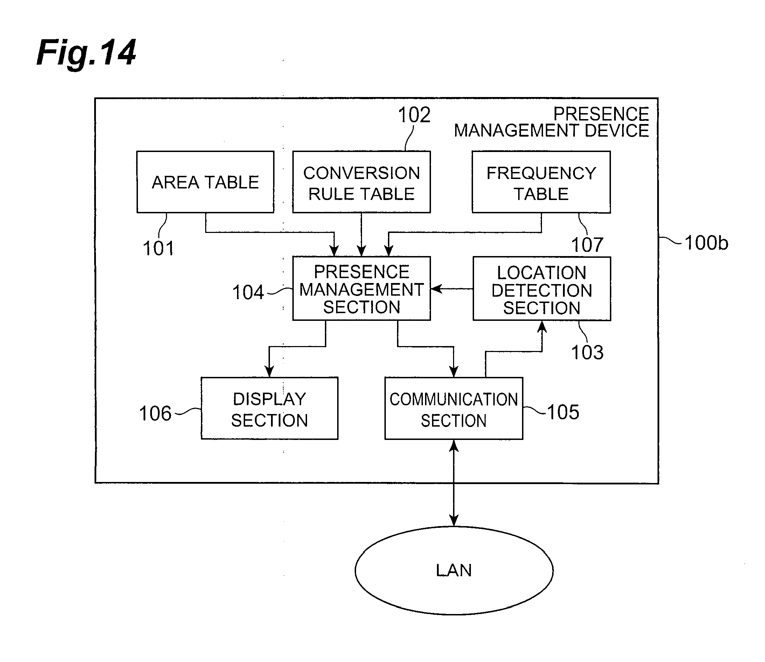

Next, a presence management device 100b in a third embodiment, capable of changing the updating processing of the presence information in accordance with the frequency that a user is located, is explained. Fig. 14 is a block configuration diagram of the presence management device 100b in the third embodiment. The presence management device 100b is configured so as to include the area table 101, the conversion rule table 102, the location detection section 103, a presence management section 104a, the communication section 105, the display section 106, and a frequency table 107 (a frequency storage means). Incidentally, it may also be possible for the area table 101 and the conversion rule table 102 to be configured as the same table by associating and storing their contents with each other.

From the area table 101 to the location detection section 103, the communication section 105 and the display section 106 are configured so as to have the same function and effect as those in the first embodiment or the second embodiment, therefore, their explanation is omitted.

The presence management section 104a has the following function in addition to the operation in the first embodiment or the second embodiment described above. In other words, the presence management section 104a has a function to calculate, when having judged that the user exists in the boundary area, an existence probability for each area based on the number of times of positioning the user read from the frequency table 107, showing the number of times the user is subjected to positioning in the area in the vicinity of the boundary area, for example, in the area neighboring the boundary area. Then, based on the calculated existence probability, the presence management section 104a judges which area the user exits in (for example, areas are selected alternatively based on the existence probability and then, an area having a higher existence probability is selected) and reads presence information corresponding to the judged area. Incidentally, it may also be possible for the presence management section 104a to have a function to perform the operation to maintain the presence information without judging the area in which the user exists, when the existence probability is less than a predetermined threshold value.

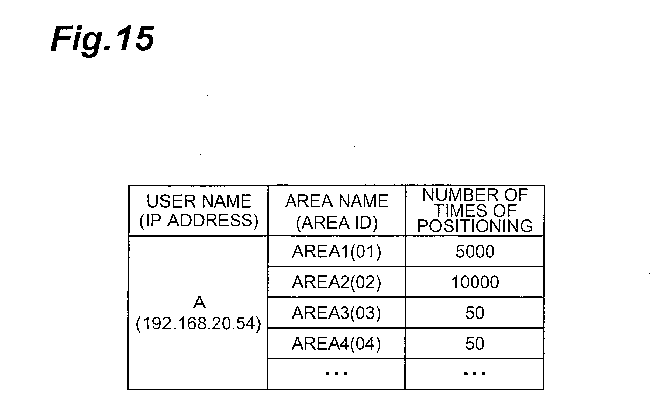

The frequency table 107 is a storage table for storing frequency information indicating the number of times (frequency) the user is subjected to positioning, distinctively for each area. The specific example is shown in Fig. 15. Fig. 15 is an explanatory diagram showing the frequency information stored in the frequency table 107. The frequency table 107 stores user names, area names, and the times of positioning the user as frequency information by associating them with each another. For example, in Fig. 15, that the user A has been subjected to positioning 5,000 times in the area 1 is stored in the frequency table 107.

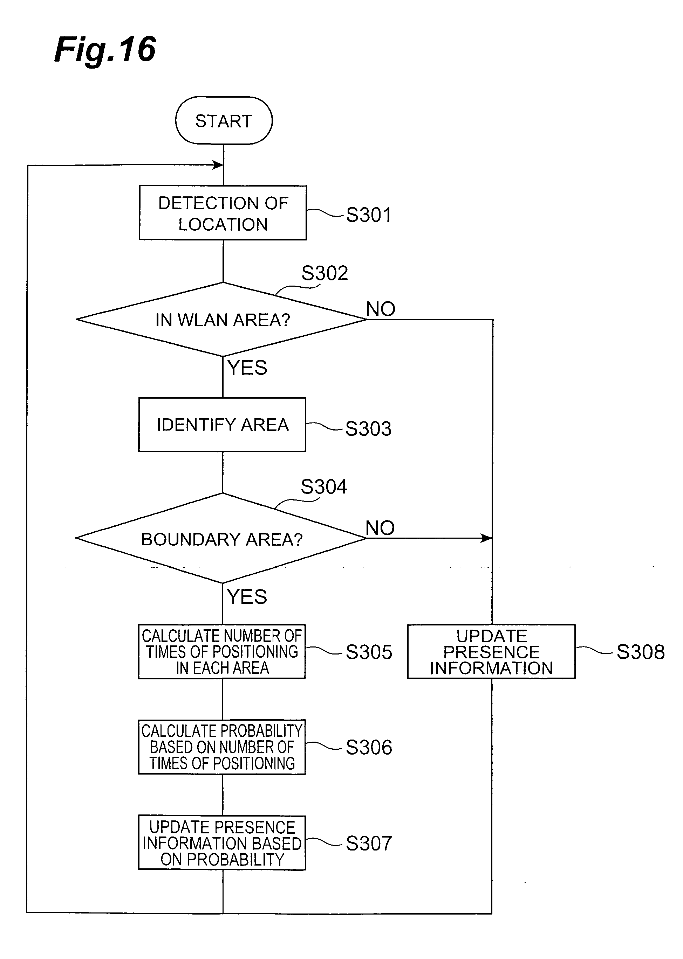

Next, the operation of the presence management device 100b thus configured is explained based on Fig. 16. Fig. 16 is a flow chart showing the operation of the presence management device 100b in the third embodiment.

First, the location detection section 103 detects location information indicating the location of a user to be detected (S301). Next, whether or not the location of the user to be detected is in the serving area of the wireless LAN is judged by the presence management section 104a (S302). Here, when it is judged that the location is not in the serving area of the wireless LAN (WLAN), that is, the location detection section 103 cannot detect the location information of the user, by the presence management section 104a, the status information indicating that the user is out of the office is stored inside the presence management section 104a as the presence information and the updating processing of the presence information is performed (S308).

Further, in S302, when it is judged that the user is in the serving area of the wireless LAN, that is, the location detection section 103 detects the location information of the user, by the presence management section 104a, area identification processing is performed by the presence management section 104a (S303). Incidentally, when no boundary area is defined in the area table 101 (for example, in the case of the area table 101 that stores the area information shown in Fig. 8 in the first embodiment), there is a case where the area cannot be identified and in such a case, identification processing to the effect that the area cannot be identified is performed. In addition, when the area is identified, the number of times of positioning corresponding to the identified area is increased by one in the frequency table 107 by the presence management section 104a.

Next, whether or not the area identified in S303 is the boundary area is judged by the presence management section 104a. Here, whether or not the area identified by the presence management section 104a based on the area information in the area table 101 is judged by the presence management section 104a based on the presence information in the conversion rule table 102 (S304). Incidentally, when no boundary area is defined, whether or not it has been possible to identify the area is judged by the presence management section 104a (S304).

When it is judged that the area in which the user is located is not the boundary area by the presence management section 104a, the status information and the position information corresponding to the area in which the user is located are read from the conversion rule table 102. Then, the status information and position information are stored inside the presence management section 104a as the presence information of the user and the presence information is updated inside the presence management section 104a (S308).

When it is judged that the area in which the user is located is the boundary area by the presence management section 104a, the number of times of positioning the user in a plurality of areas formed in the vicinity of the area judged to be the boundary area is read from the frequency table 107 (S305). Incidentally, here, it is preferable that the number of times of positioning the user, for example, in the areas adjacent to the boundary area be calculated, as the plurality of areas formed in the vicinity of the boundary area.

Next, the existence probability is calculated based on the read number of times of positioning the user (S306). For example, when the user is in the boundary area formed between the area 1 and the area 2 shown in Fig. 7, the number of times of positioning 5,000 in the area 1 adjacent thereto and the number of times of positioning 10,000 in the area 2 are read from the frequency information stored in the frequency table 107 shown in Fig. 15 by the presence management section 104a and the numbers of times of positioning are added. Then, in the presence management section 104a, with the total number of times of positioning 15,000 obtained by addition being as the population parameter, 5,000/15,000 = 0.33··· is calculated as the existence probability in the area 1 and 10,000/15,000 = 0.66··· is calculated as the existence probability in the area 2.

Then, the presence information is updated by the presence management section 104a based on the calculated existence probabilities (S307). For example, any one of the areas is selected based on the existence probabilities and the status information and the position information corresponding to the area are read from the conversion rule table 102 and the presence information inside the presence management section 104a is updated by the status information and position information. When the user is between the area 1 and the area 2, the user is judged to be in the area 2 with a probability of 66% and the status information and the position information corresponding to the area 2 are caused to be read.

Further, in another judgment method, since the possibility that the user is in the area with the higher existence probability is higher, the status information and the position information corresponding to the area are read from the conversion rule table 102 and the presence information inside the presence management section 104a is updated by the status information and position information. Furthermore, when the existence probability is equal to or greater than the predetermined threshold value, the status information and the position information corresponding to the area with the higher existence probability are read from the conversion rule table 102 and updated, and when the existence probability is less than the predetermined threshold value, it may also be possible to perform processing to maintain the presence information stored most recently.

As described above, in the presence management device 100b, the number of times of positioning the user is stored for each area, the probability that the user exists is calculated based on the number of times of positioning for each area, and an area having a higher possibility that the user exists can be judged based on the probability, therefore, it is possible to grasp the area in which the user is located more accurately, and to read and grasp the presence information corresponding to the area.

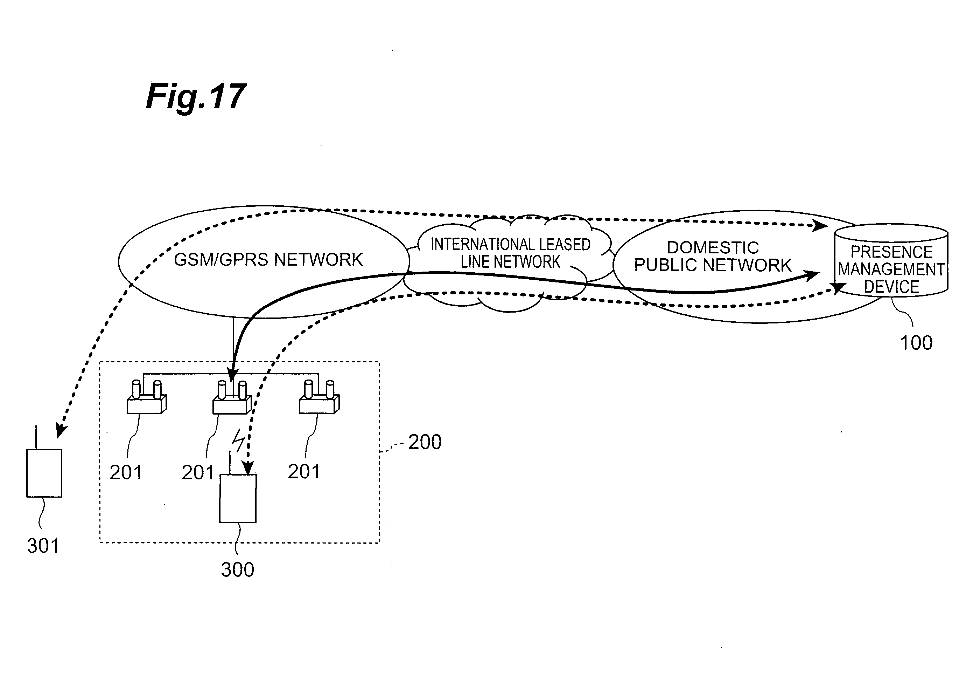

Next, the operation of the presence management device 100 or the presence management device 100b is explained, when the presence management device 100 or the presence management device 100b shown in the first to third embodiments described above is installed within the country and the range for which the location detection of a user is performed is positioned abroad. Fig. 17 is a system configuration diagram showing a system configuration when the presence management device 100 is installed within the country and the area 200 to be the range for which location detection is performed is positioned abroad. Here, the presence management device 100 is explained as an example, however, the same operation can be performed also in the presence management device 100b.

As shown in Fig. 17, the presence management device 100 is connected to the domestic public network. The domestic public network is connected to the GSM (Global System for Mobile Communications) network / GPRS (General Packet Radio Service) network, which are mainly used abroad, via the international dedicated line network. The area 200 is formed using the wireless LAN so as to allow communication and connection to the GSM network / GPRS network. In the area 200, base stations 201 of the wireless LAN are arranged and the base station 201 can detect location information (coordinate information) indicating the location of a mobile device 300. It is possible for the base station 201 to transmit the location information indicative of the location of the detected mobile device 300 to the presence management device 100.

As described in the above first embodiment, the presence management device 100 stores the area information indicating the plurality of areas divided in the area 200 and the status information indicating the status of the user for each area. In the example in Fig. 17, the presence management device 100 stores the area information and the status information of the area 200 positioned abroad. Then, the presence management device 100 judges which area the user is in based on the location information of the mobile device 300 transmitted from the base station 201 (refer to symbol A). Then, the presence management device 100 reads the status information corresponding to the area in which the user is located from the conversion rule table 102 and stores the status information as the presence information.

The presence management device 100, which has stored information as described above, can transmit the presence information in response to the request from the mobile device 300 or a mobile device 301 (refer to symbols B and C). In the mobile device 300 or the mobile device 301, it is possible for the user of the mobile device 300 or the mobile device 301 to know where the user to be managed by the presence information is or what the user is doing wherever the user is. Note that, like the mobile device 301, even if it is out of the area 200, it is also possible for the mobile device 301 to make a request for the presence information provided that it is in the environment in which communication via the GSM/GPRS neworks is performed. Further, even when the mobile device that makes a request for the presence information is within the country, it is also possible for the mobile device (not shown) that is within the country to make a request for the presence information and obtain the presence information provided that it is in the environment that allows communication and connection similarly to the domestic public network and the presence management device 100.

Next, the effect and function of the presence management devices 100 and 100b in the first to third embodiments are explained.

The presence management device 100 in the first embodiment stores the area information that defines the respective ranges of the area in a plurality of areas in the area table 101 and the conversion rule table 102 by associating the area information with the status information indicating the status of the user so that the plurality of areas are formed at predetermined intervals. Then, the location detection section 103 detects the location of the mobile terminal possessed by the user. When having judged that the mobile terminal is in an area by reading the status information corresponding to the area in which the mobile terminal detected by the location detection section 103 is located, the presence management section 104 stores the status information as the presence information. Further, when not able to identify the area corresponding to the location of the mobile terminal located by the location detection section 103 based on the area information and judging that the mobile terminal is in the boundary area, the presence management section 104 can maintain the already stored presence information.

Due to this, when the user holding the mobile terminal exists within a predetermine space between areas without being judged, despite the fact that the user is in one area, to be located in another neighboring area beyond the one area in the presence management section 104, it is possible to prevent the status of the user from being erroneously recognized based on the error in detecting the location of the mobile terminal by maintaining the presence information already stored by the presence management section 104 instead of reading the status information, and thus it is possible for the presence management section 104 to store the accurate presence information corresponding to the location of the mobile terminal held by the user. Further, because the boundary area is not defined as the area information, it is possible to reduce the amount of information that has to be prepared in advance.

Further, the presence management device 100 in the second embodiment stores the area information that defines the ranges of respective areas in the plurality of areas in the area table 101 and the conversion rule table 102 by associating the area information with the status information indicating the status of the user so that the plurality of areas are formed at predetermined intervals. Further, in the area table 101 and the conversion rule table 102, the area information indicating the range of the boundary areas formed closely between the areas in the plurality of areas is stored associated with the identification information which indicates being the boundary area.

Then, the location detection section 103 detects the location of the mobile terminal possessed by the user. When having judged that the mobile terminal is in one area by reading the status information based on the area information indicating the area in which the mobile terminal detected by the location detection section 103 is located, the presence management section 104 stores the status information as the presence information. Further, when having judged that the area in which the user is located is the boundary area by reading the identification information based on the area information of the area in which the mobile terminal detected by the location detection section 103 is located, the presence management section 104 can perform the processing to maintain the presence information stored inside the presence management section 104.

Due to this, when the user holding the mobile terminal exists within a predetermine space between areas without being judged, despite the fact that the user is in one area, to be located in another neighboring area beyond the one area, it is possible to prevent the status of the user from being erroneously recognized based on the error in detecting the location of the mobile terminal by maintaining the already stored presence information instead of reading the status information, and thus it is possible to store the accurate presence information corresponding to the location of the mobile terminal held by the user.

The presence management device 100b in the third embodiment stores the number of times the location of the mobile terminal is subjected to positioning for each area information indicating the area in the frequency table 107, in addition to the configuration of the presence management device 100. Then, when having judged that the mobile terminal is in the boundary area, it is possible for the presence management section 104a to judge the location in which the user is located based on the number of times of positioning the user stored in the frequency table 107 instead of performing the processing to maintain the already stored presence information, and to read and store the status information of the user from the conversion rule table 102 based on the area information of the judged area. Due to this, it is possible to perform processing based on the statistical information, to judge the area in which the user is located based on the past information, and to accurately manage the presence information based on the area information of the judged area.

## Claims

1. A presence management device comprising:
a storage means for storing area information for defining the range of each area in a plurality of areas so as to form the plurality of areas at predetermined intervals by associating the area information with status information indicating the status of a user;
a location detection means for detecting the location of a mobile terminal possessed by the user; and
a presence management means for, when judging that the mobile terminal is in one area by reading the status information from the storage means based on the area information indicating the area in which the mobile terminal detected by the location detection means is located, storing the status information as presence information and for, when judging that the mobile terminal is in a boundary area because of being not capable of identifying the area in which the mobile terminal detected by the location detection means is located, maintaining the already stored presence information.

2. A presence management device comprising:
a storage means for storing area information for defining the range of each area in a plurality of areas so as to form the plurality of areas at predetermined intervals by associating the area information with status information indicating the status of a user and for storing area information indicating the range of boundary areas formed closely between areas in the plurality of areas by associating the area information with identification information which indicates being a boundary area;
a location detection means for detecting the location of a mobile terminal possessed by the user; and
a presence management means for, when judging that the mobile terminal is in one area by reading the status information from the storage means based on the area information indicating the area in which the mobile terminal detected by the location detection means is located, storing the status information as presence information and for, when judging that the area in which the user is located is a boundary area by reading the identification information from the storage means based on the area information of the area in which the mobile terminal detected by the location detection means is located, performing processing to maintain the already stored presence information.

3. The presence management device according to claim 1 or 2, further comprising a frequency storage means for storing the number of times of positioning the location of the mobile terminal for each of the area information, wherein
the presence management means, when judging that the mobile terminal is located in the boundary area, judges the area in which the user is located based on the number of times of positioning stored in the frequency storage means, and reads and stores the status information of the user from the storage means based on the area information of the judged area instead of performing processing to maintain the already stored presence information.

4. A presence management method executed by a presence management device having a storage means for storing area information for defining the range of each area in a plurality of areas so as to form the plurality of areas at predetermined intervals by associating the area information with status information indicating the status of a user, the presence management method comprising;
a location detection step for detecting the location of a mobile terminal possessed by the user; and
a presence management step for, when judging that the mobile terminal is in one area by reading the status information from the storage means based on the area information indicating the area in which the mobile terminal detected in the location detection step is located, storing the status information as presence information, and for, when judging that the mobile terminal is in a boundary area because of being not capable of identifying the area in which the mobile terminal detected in the location detection step is located, maintaining the already stored presence information.

5. A presence management method executed by a presence management device having a storage means for storing area information for defining the range of each area in a plurality of areas so as to form the plurality of areas at predetermined intervals by associating the area information with status information indicating the status of a user and for storing area information indicating the range of boundary areas formed closely between areas in the plurality of areas by associating the area information with identification information which indicates being a boundary area, the presence management method comprising;
a location detection step for detecting the location of a mobile terminal possessed by the user; and
a presence management step for, when judging that the mobile terminal is in one area by reading the status information from the storage means based on the area information indicating the area in which the mobile terminal detected in the location detection step is located, storing the status information as presence information, and for, when judging that the area in which the user is located is a boundary area by reading the identification information from the storage means based on the area information of the area in which the mobile terminal detected in the location detection step is located, performing processing to maintain the already stored presence information.

6. The presence management method according to claim 4 or 5, wherein:
the presence management device further comprises a frequency storage means for storing the number of times of positioning the location of the mobile terminal for each of the area information; and
the presence management device, in the presence management step, when judging that the mobile terminal is located in the boundary area, judges the area in which the user is located based on the number of times of positioning stored in the frequency storage means, and reads and stores the status information of the user from the storage means based on the area information of the judged area instead of performing processing to maintain the already stored presence information.
